# EUROPEAN PATENT APPLICATION

(11) **EP 1 564 073 A2**
(43) Date of publication of application: **17.08.2005**
(21) Application number: 05250797.7
(22) Date of filing: 11.02.2005
(51) Int. Cl.: B60R 9/06, B60D 1/58, B60D 1/36

(54) **Vehicle load-carrying devices mounting on a tow-ball**

(30) Priority: 12.02.2004 GB 0403090
(71) Applicant: Yater, Peter Alan, Atherstone, Warwickshire CV9 3EG (GB)
(72) Inventor: Yater, Peter Alan, Atherstone, Warwickshire CV9 3EG (GB)

(57) **Abstract**

The Mounting in its different guises will allow the attachment to the associated vehicle of a range of load-carrying racks and frames.

Mountings for a flanged tow-bar fits over the tow-ball and locates into a tapered adapter trapped between the tow-ball and tow-bracket [or part of the tow-ball assembly]. The tapered element can be looked into position by moving an element across by application of a sliding part or by a cross-wise looking element which may be a bolt. The Mounting provides location in all planes for the forces associated with the carried loads and allows the assembly to be locked in position.

Mounting for a swan-neck tow-ball has the ball encircled by a shell like pair of elements. These are entered into a box-like structure attaching to the carrier I rack and damped together to firmly grip the tow-ball. The box-like element can be the same as used for the flanged-tow-bar. An optional extension can locate over the swan-neck shaft to increase resistance to rotation.

The carrier / rack can be changed by the addition of additional adapters for purpose specific carriers. The rack utilises square or oblong tube with lock-on hook or clamp adapters.

## Description

The carriage of loads external to a vehicle can be useful where the loads are large or inconvenient. Where the vehicle has a tow-ball fitted this can be used as the mounting point to support such loads. Different loads require different means of support. There are also different types of tow-ball. This invention provides a series of related methods to mount a range of support frames onto tow-balls of different types.

There are two main types of tow-ball - the flanged type fitted to the vehicle's tow-bracket with a flange and two large bolts, and the swan-neck type that has the ball on an extended neck [often removable].

In order to locate a rack or carrier rigidly onto the flanged tow-ball, the flange has an adapter fitted between tow-ball and tow-bracket. This provides a tapered socket for a matching tongue at the rear of the mounting. This provides the lateral [across the plane of the vehicle] location for the mount. The longitudinal location [along the vehicle] comes from placing a rigid box around the tow-ball itself inside which an element contacts the part of the ball nearest the vehicle and another double contact onto the flanged lower part of the tow-ball [or onto the mounting bolts]. The combination provides support for downward vertical loads onto the rack or carrier and transmits the loads straight to the tow-ball. Upward vertical forces applied to the carrier / rack are resisted by a pin or thread engaging below the tow-ball. This also provides a locking mechanism that prevents the rack being removed. It may be made lockable to prevent the rack being stolen.

Both longitudinal locating elements are adjustable to compensate for differently dimensioned tow-balls allowed within ISO [and other] standards. The mounting behind the ball uses an adjustable element [typically, but not necessarily a bolt]. The element at the bottom of the mount has a cam or bolt system to connect to the flange or bolts of the tow-bar.

The swan-neck mount has fitted clamps that rest, shell-like, around the ball the outside of which are squared. This is placed inside a box supporting the rack/ carrier [that may be that mentioned above for the flanged tow-bar] and the shell-like clamps are then forced tightly around the ball by a bolt or cam through the wall of the box giving firm location to the mount by clamping the shells around the ball. This rigidly engages through friction with the ball to give radial location in combination clamping around the neck of the ball [the dimensions of which are closely defined by the ISO standard] providing location to the mount in other planes.

Further rolational stability may be gained by use of an extension to the mount that locates round the shaft of the swan-neck tow-ball.

The mount supports a simple load-carrying frame which provides a strong and stable base for any other load-specific device. The frame can be rigidly mounted, pivoted to allow it to tilt out of the way, or be removed and re-fitted in another plane for convenient transit when unloaded. In this 'transit mode' the tongue can provide adequate longitudinal location needed for the unloaded rack.

The Mounting can be locked into load carrying position either by a clamping member or bolt locating below the ball of the tow-ball, or by the engagement of a sliding element [typically a ball] within the tapered tongue that is moved into engagement with the rear of the adapter by a locking-slide pushed down from the mounting.

If it is required to carry bikes, any bike rack, usually similar to those used on a roof-rack, can be clamped onto the basic frame. As an alternative a pair of bars can be fixed onto the frame and the bike racks mounted onto these - thus allowing them to be easily removed.

If a range of products such as cases or boxes or bales need to be carried, other accessories, such as a simple tray or a bag, can be affixed to the basic frame.

If the cases, boxes or bales need to be moved around at the other end of the journey, a trolley with wheels or casters can be mounted onto the frame.

If goods that need to be protected from the elements need to be carried then a waterproof container [box or bag] can be mounted onto the rack I carrier or into/onto a tray on the rack / carrier.

If the frames are made of square or oblong section material then all these items can be fitted onto the frame - or to each other using a combination of hook shaped mounts to stabilise one end with a simple clamp system used to fix down the other. By careful combination this allows the major forces on the load to be rigidly engaged with the tow-ball, tow-bracket and back to the vehicle.

The invention will now be described, by way of example only, with reference to the accompanying drawings.

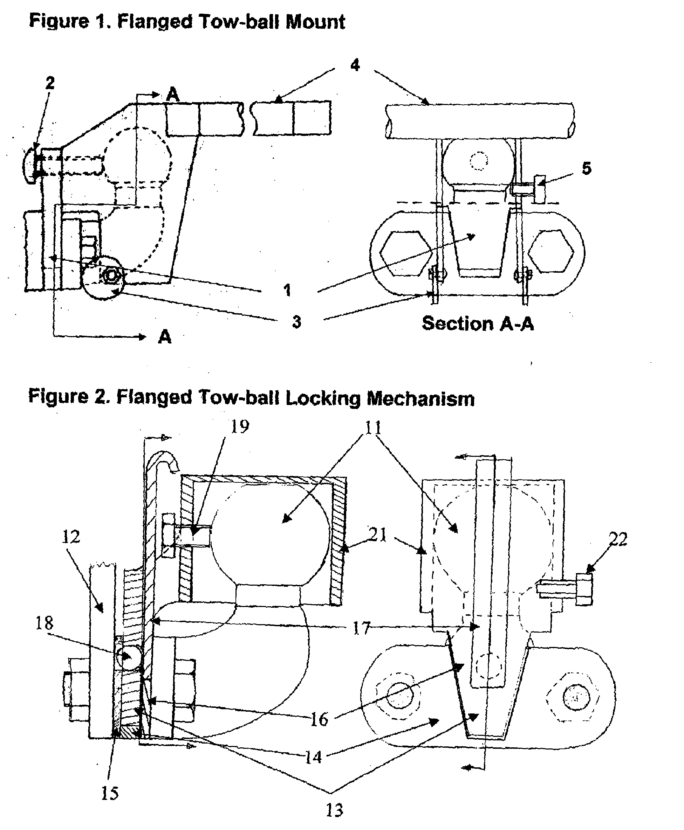

Figure 1 shows the basic configuration for the flanged tow-ball mount. Tapered tongue 1 engages in a matching slot in an adapter between tow-ball and tow-bracket. This provides lateral location against side loads on the rack / carrier 4. It can also accept longitudinal loads for an unloaded rack for the 'transit-mode', carrying position.

The longitudinal loads of a loaded rack / carrier are resisted by an adjustable element [in this case a bolt - 2] that transfers the load from the frame to the back of the tow-ball. Another adjustable element [in this case a lockable cam - 3] transfers downward loads on the rack to the bottom of the flange or the bolt-heads. This is also adjustable to allow for variations within the related ISO standard. A further element 5 engages below the ball to stop accidental [or intentional] removal.

In figure 2 the tow-ball is shown with a lockable slider within the tapered tongue. The tow-ball, 11 is bolted to the vehicle tow-bracket 12 with the female adapter 14, lock plate 15 and slide element housing 16 trapped between 11 and 12. The mounting 21 has a tapered tongue 13 as part of it. The tongue 13 fits into the female adapter 14. Within 13 is a transversely moving element 8 [in this case a ball] which, when the tapered tongue 13 is fully engaged, is moved across by a sliding element 6 to engage into the fixed locking plate 15.

While all these elements are in position the tapered element cannot be removed from engagement. To remove the mounting the sliding element 16 is moved out of position allowing the transversely moving element 16 to move across and allow the mounting to be disengaged.

The longitudinal loads are transferred from the mounting to the tow-ball by an adjustable element [in this case a bolt] 19. The combination of this with the tapered tongue and the locking mechanism fixes the mounting to the tow-ball allowing any sort of load frame to be safely attached to the mounting.

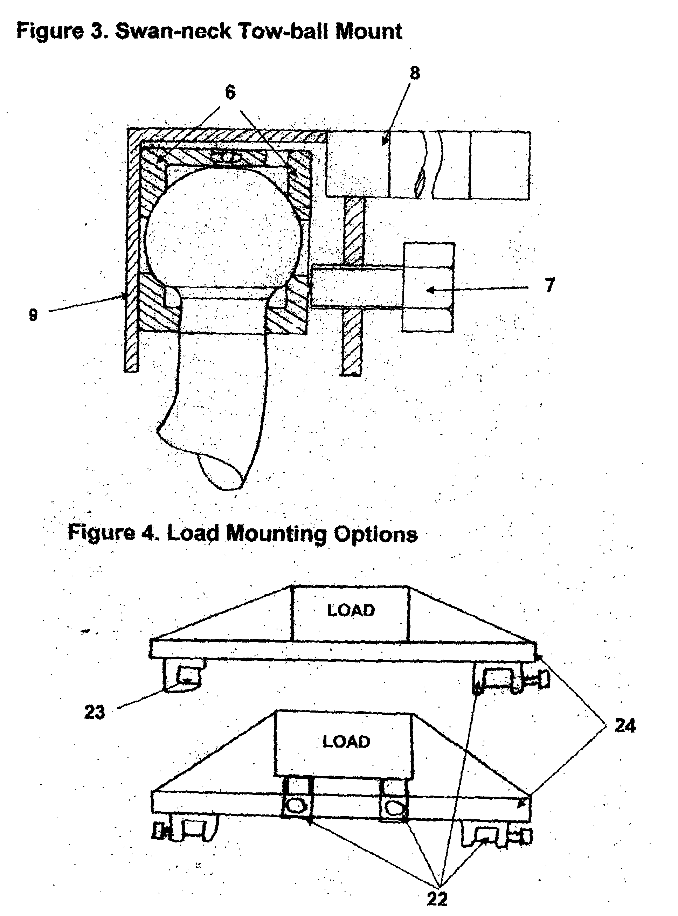

Figure 3 shows the fitting on a swan-neck tow-ball [also fits the ball of a flanged tow-ball]. Clam-shell elements 6 are clamped by bolt 7 inside a box structure 9 supporting a frame 8.

A number of systems are shown in figure 4 to allow different load specific adapters to be fixed to a basic rack / carrier 24. A clamping connector 22 is shown working with a hooked connector 23 and with a second clamping connector to provide a range of options.

## Claims

1. A box-like mounting that fits over a flanged or swan-neck tow-ball allowing support to the vehicle through the tow-bracket of a load-carrying frame for the carriage of loads external to the vehicle.

2. A box-like mounting according to claim 1, that fits onto a flanged tow-ball and supports the lateral load by engaging a tapered tongue into a fixed element behind the tow-ball flange. The longitudinal loads can be supported by adjustable elements that transfer vertical loads on the rack/carrier onto the back of the ball and the face of the flange or the locating bolts.

3. A box-like mounting according to claim 1 or claim 2, that has a sliding or threaded element engaging below the ball to resist upward loads on the rack/carrier.

4. The box-like mounting according to claim 3, in which the element may also provide an anti-theft function.

5. A box-like mounting according to any previous claim, in which the tapered tongue can lock onto the fixed element into which it engages by the movement of a sliding element within the tapered tongue.

6. A box-like mounting according to any previous claim, incorporating shell-like clamps that engage around the ball and its shoulder and are clamped around the ball inside a box-like mounting supporting the rack / carrier with an element [possibly but not necessarily a bott or cam] protruding through the wall of the box applying the clamping force.

7. A box-like mounting according to claim 6 may be further stopped from turning about the axis of the ball by an extension locating over the shaft of the swan-neck tow-ball.

8. A box-like mounting according to any previous claim that allows the load-carrying frame to be attached to the mounting in a range of different ways that may allow the rack to pivot on the mount.

9. A box-like mounting according to claim 2 that may allow the rack to be removed and re-sited in a vertical 'carrying' position.

10. A box-like mounting according to any previous claim, incorporating a rack constructed of square or oblong section material that allows accessories or purpose-specific elements to be firmly attached using hooked or clamping parts in appropriate combination to fix the elements together.
